# EUROPEAN PATENT APPLICATION

(11) **EP 4 810 831 A1**
(43) Date of publication of application: **23.09.2026**
(21) Application number: 25165360.6
(22) Date of filing: 21.03.2025
(51) Int. Cl.: F16J 15/3208, F16J 15/34, D06F 58/04

(54) **SPRING ELEMENT, SEALING ELEMENT, TUMBLE DRYER AND METHOD**

(71) Applicant: BSH Hausgeräte GmbH, 81739 München (DE)
(72) Inventor: Geberle, Damian, 94-058 Lodz (PL); Baran, Marcin, 95-080 Tuszyn (PL)

(57) **Abstract**

The present invention relates to a spring element (10) for a sealing element (11) of a household appliance with a rotating drum, comprising: a ring portion (12) designed to be connected to a static element of the household appliance, multiple spring portions (13), designed to provide a spring force against the rotating drum, wherein the spring portions (13) are integral with the ring portion (12).

## Description

The present invention relates to a spring element for a sealing element of a household appliance with a rotating drum. Furthermore, the present invention relates to a sealing element with such a spring element, a tumble dryer and a method for producing a sealing element.

Tumble dryers, for example, use a heated process air stream to heat textiles inside a rotating drum and to absorb moisture from the textiles. It is known to seal the rotating drum of the dryer against a surface, particularly against a surface opposite a feed opening. Usually. A specially designed sealing element is used for this purpose. This sealing element comprises an elastic element, which ensures sufficient tightness and pressure on the drum, and an abrasive element, which is in direct contact with the rotating drum. The abrasive element is subject to constant abrasion during operation, which is why the abrasive element can wear out quickly. However, an additional component is needed to fix such the sealing element in place on a surface. This means of connection is complex and not cost effective.

In view of this, it has been found that a further need exists to provide a means for a better connection of a sealing element.

Therefore, it is an object of the present invention to provide a spring element for a household appliance, in particular for a tumble dryer. Furthermore, it is an object of the present invention to provide a sealing element, a tumble dryer with such a sealing element and a method to produce a sealing element.

These and other objects, which become apparent upon reading the following description, are solved by the subject matter of the independent claims. The dependent claims refer to preferred embodiments of the present invention.

A first aspect of the present invention is directed to a spring element for a sealing element of a household appliance with a rotating drum, comprising: a ring portion designed to be connected to a static element of the household appliance, multiple spring portions, designed to provide a spring force against the rotating drum, wherein the spring portions are integral with the ring portion.

Compared to the known state of the art, the spring element according to the present invention allows for an improved, in particular an evenly distributed, tightness. Furthermore, the spring element allows for a reduced pressure on the rotating drum and therefore a reduced torque. The spring element is less complex, because it comprises fewer single pieces. For example, a clamping ring is no longer needed. That is, the spring element according to the invention is also more cost-effective.

The spring element is designed to be part of a sealing element. The sealing element is preferably used to seal a rotating drum in a household appliance with respect to a static element, in particular a back panel. Preferably, the rotating drum may be processing room for drying or washing clothes and/or other textile products. For example, the household appliance may be a tumble dryer.

The ring section may preferably have a ring-shaped or at least a circular arc-shaped geometry. The ring section is designed to provide a shape that is adapted to the rotating drum. The ring section may be the portion by which the spring element is connected to the static element, in particular the back panel, in the assembled state. Wherein the ring portion and the spring portion are designed to be connected to an abrasive element, in particular felt.

The spring portions are integrally formed with the ring portion. This means that the spring portions are firmly connected to the ring portion. It is possible that the spring portions are connected to the ring portion in a form-fitting, force-fitting and/or material-fitting manner. The spring portions are intended to provide a spring force. When the spring element is assembled, the spring portions strike the rotating drum with a spring force to create a seal.

In an embodiment, the spring portions are designed as protrusions which extend from the ring portion in a radial direction. The extensions may also be referred to as extensions. In particular, the protrusions or spring portions may extend radially outwards from the ring section. It is possible that the extensions or spring portions are arranged on a radially outwardly directed surrounding surface or shell surface of the ring section.

In an embodiment, the spring portions are arranged symmetrical on the ring portion, in particular rotationally symmetrical. In an assembled state, this makes it possible to provide an evenly distributed spring force. The spring element may comprise several spring portions or extensions. In particular, the spring element may preferably have at least two, at least four, at least eight, at least sixteen or at least twenty spring sections or extensions. The individual spring portions or extensions preferably have the same dimensions. This means that the individual spring portions or protrusions may be essentially identical in design. This makes it possible to enable cost-effective production.

In an embodiment, the multiple spring portions widen in the radial direction. More precisely, the free axial end of the spring portions may extend more in a circumferential direction, than a connection part of the spring elements that connects the spring portion to the ring portion. For example, the extensions may be tongue-shaped. Alternatively, the extensions or spring portions may have a dovetail-shaped geometry. This allows the extensions or spring portions to be made elastic, wherein a large contact area for an abrasive element can be provided at the same time.

In an embodiment, the spring element, in particular the ring portion and/or the spring portions, is made from a plate material, in particular a metal sheet or a plastic plate. In this way, the spring element may be manufactured using easily accessible materials. Steel or plastic materials have more repeatable parameters than rubber. As a result, this may improve the control of the contact forces on the drum in an assembled sate.

In an embodiment, the ring portion and the spring portions are made from a single piece of material. For example, the ring portion and the spring portion may be stamped, cut and/or milled from a single piece of material. Preferably, the ring portion and the spring portion are produced from a single piece of material, preferably in a single forming process. In this way, it is possible to make the production more efficient and to save time and costs.

In an embodiment, the ring portion comprises a through hole to connect the sealing element to the static element of the household appliance. This makes it possible to connect the spring element to a static element, for example to the back panel of a household appliance. In particular, the spring element may be connected to the static element by a screw or riveted connection.

In an embodiment, the spring element comprises at least two spring portions, that are connected to each other, such that the two ring portions form a ring.

A further aspect of the present invention is directed to a sealing element for sealing a rotating drum against a surface of a household appliance, in particular a tumble dryer, comprising: a spring element according to one of the preceding embodiments and an abrasive element designed to be in permanent contact with the rotating drum.

In an embodiment, the abrasive element comprises a textile-material. In particular, the abrasive element may comprise a felt material. The felt material is particularly suitable for being in permanent contact with the rotating drum and for providing a seal. Preferably, the abrasive element is arranged at least partially on the spring portion and/or the ring portion.

In an embodiment, the sealing element consists of a ring portion, multiple spring portions and an abrasive element. The spring portions, may have a special geometry to allow a degree of flexibility. The geometry forms separate elements or protrusions, which are not connected to each other but which are connected to the ring portion to provide greater flexibility and independent operation. The abrasive element of the sealing element is a felt, which provides an adequate seal between the rotating drum and a back panel, together with the spring portions, which guarantees constant contact with the rotating drum. The sealing element is connected to a back panel by means of screws and/or rivets.

A further aspect of the present invention is directed to a tumble dryer comprising a spring element according to one of the preceding embodiments or a sealing element according to one of the preceding embodiments.

A further aspect of the present invention is directed to a method for producing a sealing element according to one of the preceding embodiments, comprising: providing or producing a spring element, providing or producing an abrasive element, connecting the abrasive element with the spring element.

In the following, the present disclosure is described exemplarily with reference to the enclosed figures, in which
- **Figure 1**: is a perspective view of a spring element according an embodiment of the present invention;
- **Figure 2**: is a detailed view of the spring element according to **Figure 1****;**
- **Figure 3**: is a perspective view of a sealing element with a spring element according to **Figure 1****;**
- **Figure 4**: is a perspective view of the sealing element according to **Figure 3** in an installed state; and
- **Figure 5**: a detailed view of the sealing element according to **Figure 4****.**

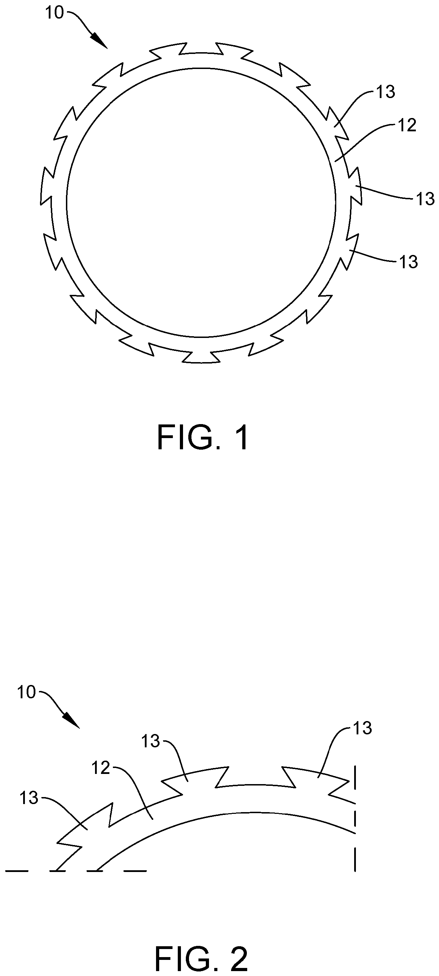

**Figure 1** shows a spring element 10. The spring element 10 comprises a ring portion 12 and a plurality of spring portions 13. The ring portion 12 has an annular geometry. More specifically, the ring portion 12 forms a closed ring.

Fifteen spring portions 13 are arranged on the ring portion 12. The spring portions 13 are designed as extensions. The spring portions 13 may also be referred to as tongues or teeth. The spring portions 13 extend in a radial direction outwards away from the ring portion 12. This means that the spring portions 13 extend away from a center of the ring portion 12. The spring portions 13 are separated from each other by a gap.

**Figure 2** shows the spring portions 13 in more detail. The spring portions 13 are identical, i.e. are designed the same. The spring portions 13 are larger at their free axial end in the circumferential direction of the ring portion 12 than a connection part of the spring elements 13 that connects the spring portion to the ring portion 12. In other words, the spring portions 13 each have a dovetailed geometry. The spring portions 13 are spaced apart from one another by recesses.

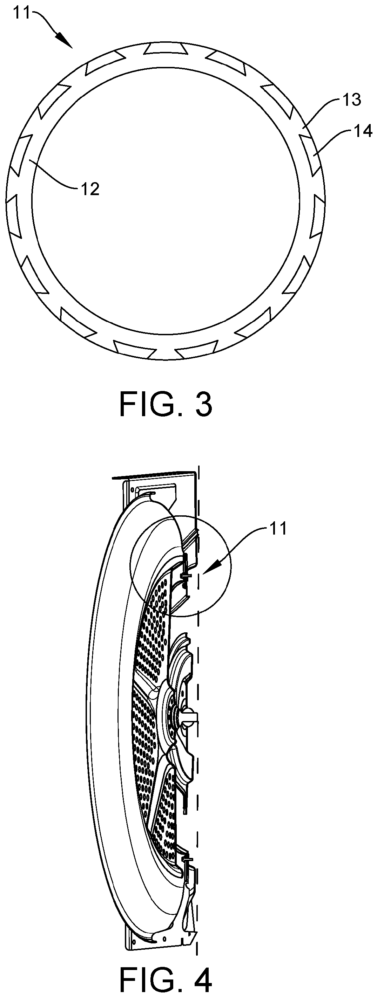

**Figure 3** shows a sealing element 11 comprising a spring element 10 according to **Figure 1****,** on which an abrasive element 14 is arranged. The abrasive element 14 encloses the spring portions 13 and the ring portion 12. The abrasive element 14 may, for example, be made of or comprise a felt material. The abrasive element 14 is arranged on both sides of the spring element 10.

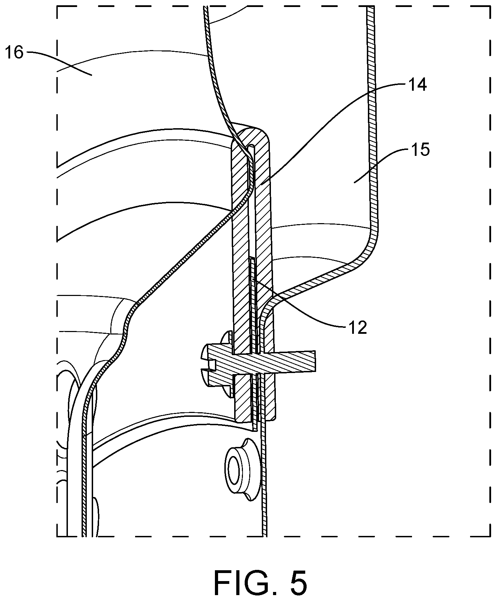

**Figure 4** and **Figure 5** show a mounting position of the sealing element 11 in a tumble dryer. In **Figure 4** and **Figure 5****,** a cut is shown, wherein the cut extends through a gap between two spring portions 13. The sealing element 11 is arranged on a back panel 15 of the tumble dryer and is firmly connected to the back panel 15. It can be seen from **Figure 5** that the sealing element 11 is screwed to the back panel 15. The spring portions 13 rest against a rotating drum 16 of the tumble dryer. More precisely, the spring portions 13 rest against the rotating drum 16 in such a way that the spring portions 13 deform elastically so that the spring portions 13 apply a spring force to the rotating drum 16. That way, the abrasive element 14 is pressed against the rotating drum 16 such that a seal to the outside is provided. In other words, the spring portions 13 and the abrasive element 14 are connected to each other. The sealing element 11 is installed such that the rotating drum 16 elastically deforms the spring portions 13. That means, the spring portions 13 are bent away from the rotating drum 16. As a result, the spring portions 13 apply a spring force or a restoring force towards the rotating drum 16. During operation of the tumble dryer, the abrasive element 14 stays in permanent contact with the rotating drum 16 because of the spring force of the spring portions 13.

The present disclosure has been described in conjunction with a preferred embodiment as examples as well. However, other variations can be understood and effected by those persons skilled in the art and practicing the claimed invention, from the studies of the drawings, this disclosure and the claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

### Reference signs

- 10: spring element
- 11: sealing element
- 12: ring portion
- 13: spring portion
- 14: abrasive element
- 15: back panel
- 16: rotating drum

## Claims

1. Spring element (10) for a sealing element (11) of a household appliance with a rotating drum, comprising:
- a ring portion (12) designed to be connected to a static element of the household appliance,
- multiple spring portions (13), designed to provide a spring force against the rotating drum,
- wherein the spring portions (13) are integral with the ring portion (12).

2. Spring element (10) according to claim 1, wherein the spring portions are designed as protrusions which extend from the ring portion in a radial direction.

3. Spring element (10) according to claim 1 or 2, wherein the spring portions are arranged symmetrical on the ring portion, in particular rotationally symmetrical.

4. Spring element (10) according to one of the preceding claims, wherein the multiple spring portions widen in the radial direction.

5. Spring element (10) according to one of the preceding claims, wherein the spring element, in particular the ring portion and/or the spring portions, is made from a plate material, in particular a metal sheet or a plastic plate.

6. Spring element (10) according to one of the preceding claims, wherein the ring portion and the spring portions are made from a single piece of material.

7. Spring element (10) according to one of the preceding claims, wherein the ring portion (12) comprises a through hole to connect the sealing element to the static element of the household appliance.

8. Sealing element (11) for sealing a rotating drum against a surface of a household appliance, in particular a tumble dryer, comprising:
- a spring element (10) according to one of the preceding claims and
- an abrasive element (14) designed to be in permanent contact with the rotating drum.

9. Tumble dryer comprising a spring element according to one of the claims 1 to 7 or a sealing element according to claim 8.

10. Method for producing a sealing element according to claim 8, comprising:
- providing or producing a spring element (10),
- providing or producing an abrasive element (14),
- connecting the abrasive element (14) with the spring element (10).
